**Europäisches Patentamt**

**European Patent Office**

**Office européen des brevets**

(19)

(11) Numéro de publication: **0 170 586**
**B1**

(12)

# FASCICULE DE BREVET EUROPEEN

(45) Date de publication du fascicule du brevet:
**18.10.89**

(51) Int. Cl.⁴: **B 26 D 3/00**

(21) Numéro de dépôt: **85401466.9**

(22) Date de dépôt: **17.07.85**

(54) Découpe longitudinale d'un produit tubulaire fibreux.

(30) Priorité: **20.07.84 FR 8411512**

(43) Date de publication de la demande:
**05.02.86 Bulletin 86/6**

(45) Mention de la délivrance du brevet:
**18.10.89 Bulletin 89/42**

(84) Etats contractants désignés:
**AT BE CH DE FR GB IT LI LU NL SE**

(56) Documents cités:
**EP-A- 0 063 869**
**DE-A- 2 132 843**
**DE-A- 2 841 236**
**FR-A- 2 271 006**

(73) Titulaire: **ISOVER SAINT-GOBAIN, Les**
**Miroirs 18, avenue d'Alsace, F-92400 Courbevoie (FR)**

(72) Inventeur: **Gerber, Gérard, 29 Square G. Brassens,**
**F-60750 Choisy au Bac (FR)**
Inventeur: **Leblond, André, 492 Rue G. Clémenceau,**
**F-60750 Choisy au Bac (FR)**

(74) Mandataire: **Leconte, Jean-Gérard et al, Saint-Gobain**
**Recherche 39, Quai Lucien Lefranc,**
**F-93304 Aubervilliers Cedex (FR)**

Il est rappelé que. Dans un délai de neuf mois à compter de la date de publication de la mention de la délivrance du brevet européen toute personne peut faire opposition au brevet européen délivré, auprès de l'Office européen des brevets L'opposition doit
être formée par écrit et motivée. Elle n'est réputée formée qu'après paiement de la taxe d'opposition (Art. 99(1) Convention sur le
brevet européen).

ACTORUM AG

## Description

La présente invention est relative à la découpe d'un produit tubulaire fibreux, et plus précisément à la découpe longitudinale de l'épaisseur d'un tel produit suivant un profil en forme de marche.

L'invention s'applique notamment à la découpe de coquilles isolantes, c'est-à-dire de produits cylindriques creux formés de fibres dans lesquelles est réparti un liant polymérisé.

De telles coquilles, par exemple à base de fibres minérales telles que des fibres de verre, peuvent être utilisées pour l'isolation des conduits. La découpe longitudinale pratiquée dans la coquille rend possible par l'ouverture et la fermeture de la coquille sa mise en place autour du conduit. Après la mise en place de la coquille, il subsiste une fente entre les deux bords de la coquille qui ont été séparés du fait de la découpe et cette fente peut donner lieu à des pertes thermiques indésirables. Lorsque la découpe est radiale, en particulier, ces pertes sont susceptibles de se produire relativement facilement.

On a donc cherché à produire dans des coquilles isolantes des découpes suivant un profil en forme de marche de façon à ce que les parois découpées viennent, au moment de la fermeture de la coquille, se recouvrir l'une l'autre au niveau de la marche, de façon à limiter les conditions d'établissement de ponts thermiques, favorisant les pertes thermiques.

Le document DE-A-2 132 843 décrit un procédé de formation d'une fente longitudinale dans un produit fibreux, qui consiste à utiliser une lame pour former à partir de l'intérieur du produit, une première découpe radiale, puis une découpe courbée ayant le profil du produit tubulaire, puis une découpe radiale. Pour compenser la force appliquée à la section du tube, qui est dirigée vers l'extérieur, la lame est associée à un élément de maintien. Un tel procédé peut entraîner un déchirement de la matière constituant le produit tubulaire.

Le document EP-A-0 063 869 décrit un procédé de découpe longitudinale d'une coquille isolante à base de fibres minérales dont la mise en œuvre conduit à l'obtention d'une fente profilée en forme de marche, qui traverse de part en part la paroi de la coquille.

Selon le procédé connu, on découpe la paroi de la coquille sur une partie de son épaisseur, d'une part depuis l'intérieur, d'autre part depuis l'extérieur, de façon à produire dans la paroi deux fentes parallèles quasiment radiales. Chacune de ces fentes définit dans l'épaisseur de la paroi un bord interne ou une extrémité puisqu'elle ne traverse pas l'épaisseur de la coquille de part en part. Pour produire une fente sur toute l'épaisseur de la coquille, on applique à proximité des bords internes des fentes parallèles des forces de cisaillement qui agissent sur la matière comprise entre lesdites extrémités pour la déchirer.

Un tel procédé présente toutefois un certain nombre d'inconvénients qui concernent notamment l'état de la coquille au niveau de la partie déchirée. La coquille est soumise à ce niveau à des contraintes mécaniques sous la forme d'un brusque étirage après la compression correspondant à la formation des fentes parallèles. Ces contraintes peuvent conduire à une désagrégation de la structure fibreuse, et donc à la formation d'un profil de découpe irrégulier. Les coquilles sont en effet fabriquées de la façon suivante: on enroule un tapis de fibres imprégnées d'une composition d'encollage servant à lier les fibres, autour d'un mandrin chauffé. L'enroulement obtenu est envoyé dans une étuve de polymérisation pour polymériser le liant. La structure obtenue présente donc une certaine cohésion qu'il convient de ne pas détruire.

L'invention se propose de fournir un procédé de formation d'une fente profilée en forme de marche, dans la paroi d'un produit cylindrique fibreux, notamment une coquille cylindrique isolante à base de fibres minérales dans lesquelles est réparti un liant polymérisé, procédé grâce auquel les possibilités d'établissement de ponts thermiques se trouvent limitées par, en particulier, l'existence d'une ligne de découpe qui soit parfaitement régulière et ne conduise à aucune altération de la structure fibreuse.

A cette fin, l'invention propose un procédé de formation d'une fente longitudinale profilée en forme de marche dans un produit tubulaire fibreux, notamment une coquille cylindrique isolante à base de fibres minérales dans lesquelles est réparti un liant polymérisé, selon lequel on découpe partiellement la paroi du produit, d'une part depuis l'intérieur, d'autre part depuis l'extérieur dans une direction radiale de façon à produire deux découpes quasiment parallèles et légèrement décalées l'une par rapport à l'autre, chacune desdites découpes définissant une extrémité interne dans l'épaisseur de la paroi. Ce procédé est caractérisé en ce que, simultanément à la formation de deux découpes radiales, on forme une troisième découpe dans l'épaisseur de la paroi, cette troisième découpe pratiquement perpendiculaire à celle du plan de découpe radiale, de sorte que les extrémités internes des découpes radiales viennent rencontrer la troisième découpe formée.

L'invention concerne en outre un dispositif pour la mise en œuvre du procédé de formation d'une fente longitudinale en forme de marche dans un produit tubulaire fibreux, défini précédemment.

Ce dispositif comprend un outil de découpe à deux lames présentant une partie tranchante, disposées dans deux plans essentiellement parallèles situés à faible distance l'un de l'autre, et permettant de découper la paroi du produit tubulaire fibreux sur une partie de son épaisseur, d'une part depuis l'intérieur, d'autre part depuis l'extérieur, de façon à produire, dans la paroi, deux fentes quasiment parallèles suivant une direction radiale, et des moyens pour créer un mouvement relatif entre le produit tubulaire fibreux et l'outil de découpe.

Ce dispositif est caractérisé en ce que les deux lames sont assemblées de façon à être séparées par un plan de jonction, le dit plan de jonction se trouvant dans l'épaisseur de la paroi à découper et en ce qu'il comprend en outre une lame supplémentaire ou éperon située dans le prolongement dudit plan et dans un plan sensiblement perpendiculaire au plan des lames et agencée de façon à produire une troisième découpe essentiellement perpendiculaire aux deux fentes précédentes.

Ainsi, pour découper la paroi du produit, selon l'invention, on crée un mouvement relatif entre ledit produit et l'outil de découpe composé de deux lames principales disposées dans deux plans essentiellement parallèles situés à une faible distance l'un de l'autre, lesdites lames étant agencées de façon à produire dans la paroi du produit, dans une direction radiale, une découpe depuis l'intérieur et une depuis l'extérieur, et de la lame supplémentaire située dans un plan sensiblement perpendiculaire au plan desdites lames principales et agencée de façon à produire une découpe essentiellement perpendiculaire aux précédentes.

Pour que la troisième découpe ou découpe tangentielle. se fasse dans l'épaisseur de la paroi, on règle la position relative du produit et de la lame supplémentaire de façon à maintenir tout au long de l'opération, ladite lame dans l'épaisseur de la paroi.

Suivant un autre aspect de l'invention, on crée simultanément des efforts de compression s'exerçant d'une part depuis l'intérieur, d'autre part depuis l'extérieur de la paroi, et dont les effets conjugués atteignent leur maximum vers le milieu de l'épaisseur de la paroi sur une zone dont la largeur correspond approximativement à l'écartement des plans respectifs des deux lames principales. et un effort, agissant en sens inverse, qui écarte les strates de fibres au moyen de la lame supplémentaire. On obtient donc en fin d'opération. c'est-à-dire lorsque les bords des découpes parallèles atteignent la découpe tangentielle pour former une fente sur toute l'épaisseur de la paroi, un certain équilibrage des forces s'exerçant sur la zone centrale, diminuant ainsi les risques d'endommagement du produit.

Par ailleurs. indépendamment de l'effet mécanique favorable, l'introduction de la lame supplémentaire permet une stabilisation de la position relative du produit à découper et de l'outil de découpe.

En effet, dans les procédés de découpe tels qu'ils sont couramment mis en œuvre, par exemple pour produire des fentes rectilignes, le mouvement relatif du produit et de l'outil est obtenu en laissant l'outil fixe et en faisant défiler le produit dans le sens longitudinal. Cette condition permet de travailler facilement en continu, et d'associer la découpe du produit, notamment dans le cas de coquilles isolantes, à la succession d'étapes conduisant à son obtention à partir d'un tapis de fibres imprégnées d'une composition d'encollage.

Or, lors d'une telle opération, on peut observer un mouvement relatif indésirable entre d'une part le plan défini par les lames de découpe et d'autre part l'axe de la coquille qui défile à sa rencontre dans le sens longitudinal. Ce mouvement indésirable peut se produire de deux façons: d'une part un mouvement latéral, et d'autre part un mouvement qui modifie l'emplacement de l'outil de découpe dans l'épaisseur de la paroi, ce qui peut conduire à des irrégularités dans la découpe, et donc à l'obtention d'une ligne de découpe qui ne soit pas parfaitement rectiligne sur toute la longueur de la coquille.

La présence d'un organe supplémentaire qui agit simultanément dans une direction perpendiculaire à celle du mouvement relatif longitudinal entre les lames et le produit évite avantageusement de tels risques en guidant en quelque sorte le mouvement relatif du produit à découper et de l'outil composé desdites lames, de façon à maintenir le produit et l'outil dans leur position respective souhaitée. L'organe supplémentaire crée ainsi une stabilisation de la position relative de la coquille et de l'outil dans un plan horizontal ou vertical.

Suivant un mode de mise en œuvre encore plus avantageux de l'invention, on peut créer un équilibrage des forces qui ne soit plus limité à la seule zone centrale de la paroi. Selon ce mode de réalisation, on amorce simultanément en plus de la découpe tangentielle, non plus deux mais quatre découpes radiales, de façon à obtenir la fente profilée en forme de marche désirée en faisant subir à la structure fibreuse des contraintes encore plus réduites.

Plus précisément, on amorce, à partir d'un certain niveau d'épaisseur de la paroi, deux découpes supplémentaires: l'une dirigée vers l'extérieur de la coquille et venant à la rencontre de la découpe induite depuis la surface externe de la paroi: l'autre dirigée vers l'intérieur de la coquille et venant à la rencontre de la découpe induite depuis la surface interne de la paroi.

La simultanéité des découpes est assurée par la solidarité des organes qui les effectuent. Comme indiqué précédemment, la découpe tangentielle est assurée par une lame supplémentaire située dans un plan perpendiculaire à celui des deux lames principales. Pour produire à partir de ladite découpe tangentielle, les amorces de découpes radiales souhaitées, on adjoint à la lame supplémentaire deux ailerons disposés l'un au-dessus, dans le plan de la lame agissant depuis l'extérieur de la coquille, l'autre au-dessous, dans le plan de la lame agissant depuis l'intérieur de la coquille.

Suivant ce mode de réalisation de l'invention, on réalise avantageusement un bon équilibre des efforts s'exerçant sur la paroi à découper, par rapport à un plan passant par la moitié de l'épaisseur de la paroi.

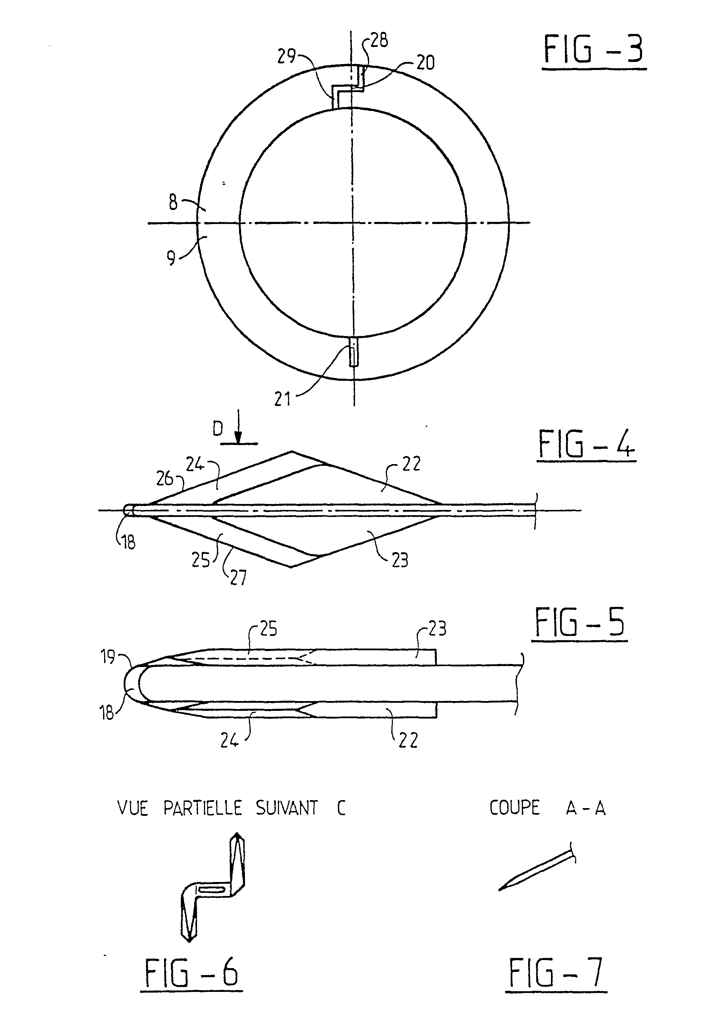

Suivant un autre mode de réalisation de l'invention, on produit simultanément dans la paroi symétrique de la paroi découpée suivant un profil en forme de marche, par rapport à l'axe longitudinal du produit, une découpe rectiligne (21) sur une partie seulement de son épaisseur (figure 3).

D'autres caractéristiques et avantages de l'invention apparaîtront au cours de la description suivante, en relation avec les figures 1 à 7 qui représentent un mode particulier de réalisation d'un dispositif selon l'invention, pour la découpe d'une coquille.

La figure 1 est une vue schématique de face représentant la position du dispositif de découpe à l'intérieur d'une coquille,

La figure 2 est une vue de face d'un outil de découpe selon l'invention,

La figure 3 montre les découpes telles qu'elles apparaissent dans une coquille vue suivant son axe,

La figure 4 représente une vue agrandie de la lame supplémentaire de découpe tangentielle de la figure 1,

La figure 5 est une vue suivant D de la figure 4,

La figure 6 est une vue partielle selon C de la figure 2,

La figure 7 est une découpe selon la ligne A.A de la figure 2.

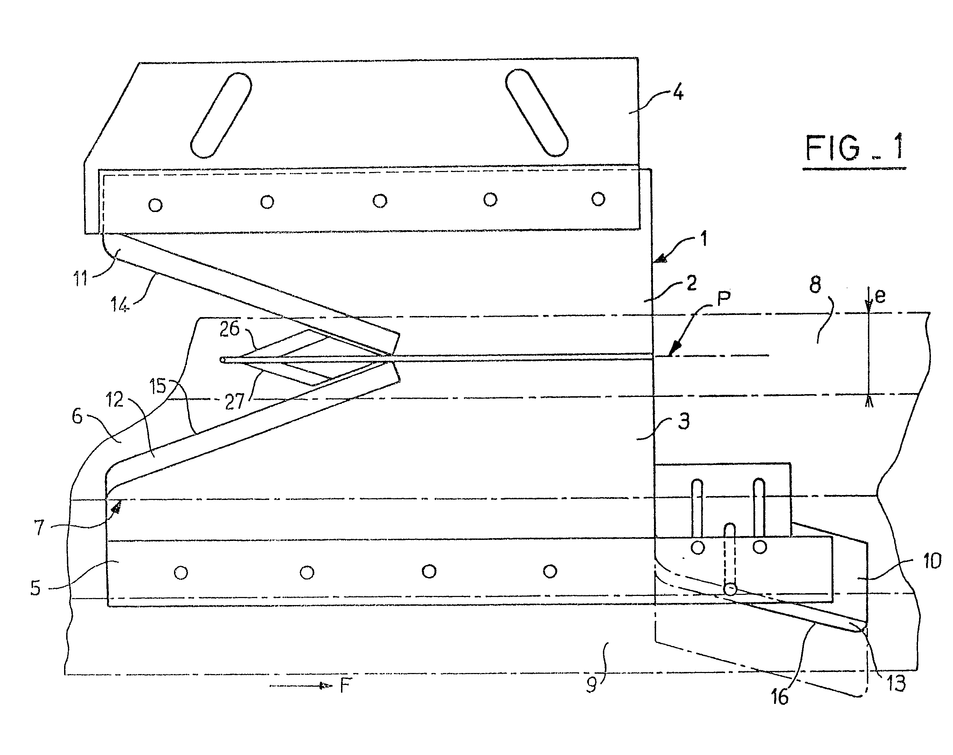

La figure 1 permet de comprendre comment est mis en œuvre le procédé de découpe selon l'invention. On a représenté l'outil de découpe proprement dit 1 composé de deux lames 2 et 3, la lame 2 étant fixée sur un porte-lame 4 relié à un support de lame non représenté et la lame 3 sur un porte-lame 5. Dans ce mode de réalisation, le mouvement relatif de la coquille 6 à découper, par rapport à l'outil de découpe, est obtenu en mettant en mouvement la coquille 6 dans le sens de son axe longitudinal 7 et dans la direction indiquée par la flèche F, à l'aide de moyens non représentés et en laissant l'outil de découpe fixe. Les deux lames 2 et 3 sont séparées par un plan de jonction P. Par des moyens appropriés non représentés, les lames et leurs supports sont rendus mobiles dans un plan vertical de façon à régler la position de l'outil de découpe en fonction de la position de l'épaisseur de la paroi à découper.

La coquille 6 est découpée suivant deux de ses parois, 8 et 9, dont l'épaisseur est désignée par e. De préférence, on fait en sorte que le plan de jonction P se trouve approximativement au milieu e/2 de la paroi 8, pour que la découpe tangentielle soit centrée au milieu de la paroi. Selon la figure, on adjoint au porte-lame 5, à l'arrière de la lame 2, une lame 10 servant pour la découpe partielle rectiligne 21 (figure 3) de la paroi 9.

Le procédé selon l'invention concerne essentiellement la découpe de la paroi 8, c'est pourquoi l'outil composé des deux lames 2 et 3 sera décrit plus précisément. Les lames 2 et 3, ainsi que la lame 10, comportent essentiellement une partie tranchante, respectivement 11, 12, 13, avec un bord effilé 14, 15, 16.

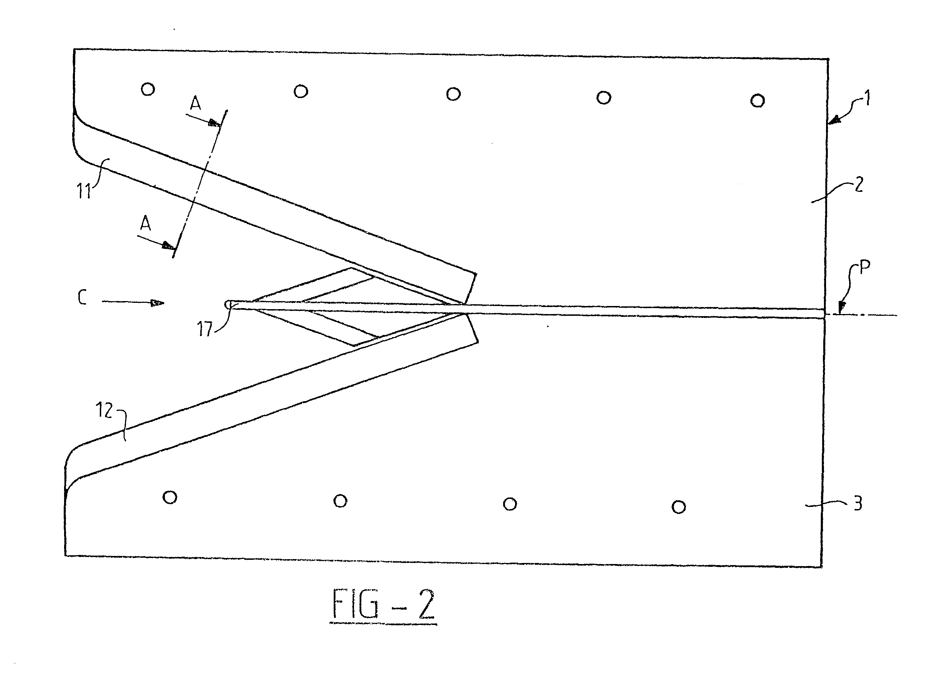

La figure 2 représente l'outil de découpe 1 proprement dit. On retrouve les lames 2 et 3 avec leurs parties tranchantes 11 et 12, et séparées par le plan de jonction P. Une lame supplémentaire 17 est fixée au plan de jonction P. Cette lame qui sera désignée ultérieurement sous le nom d'éperon comprend une partie plane 18 (comme cela apparaît clairement figures 4 et 5) dont l'extrémité coupante 19 produit la découpe tangentielle 20. De part et d'autre de la partie plane 18, on trouve deux ailerons 22, 23 l'un 22 au-dessus du plan de l'éperon, l'autre 23 en-dessous. Lesdits ailerons ont une section triangulaire comme cela apparaît aux figures 4 et 6. Ils présentent une partie tranchante, respectivement 24, 25 dont le bord, respectivement 26, 27 est effilé pour permettre une pénétration plus rapide dans la matière à découper. C'est la présence desdits ailerons qui permet, à partir de la découpe 20, d'amorcer, simultanément à l'action de la lame 2 par l'extérieur de la paroi 8 de la coquille et de la lame 3 par l'intérieur de la paroi 8, une découpe radiale à partir du milieu de l'épaisseur e de la paroi 8 pour la formation des découpes 28 et 29.

Avantageusement, pour que l'équilibre des contraintes à l'intérieur de la structure fibreuse soit réalisé de façon optimale au moment de la découpe, on fait en sorte que l'outil de découpe présente une totale symétrie de part et d'autre du plan de jonction P des lames 2 et 3. L'angle défini par le bord 14 de la lame 2 et le bord 26 de l'aileron 22 est égal à l'angle défini par le bord 27 de l'aileron 23 et le bord 15 de la lame 3, les bords 14 et 27 d'une part, 15 et 26 d'autre part étant respectivement parallèles. Grâce à ces moyens, on obtient un équilibrage des forces de part et d'autre du plan de jonction P, en chaque point de l'épaisseur de la paroi découpée à partir de la découpe tangentielle 20.

Avantageusement, on donne une valeur comprise entre 30 et 50 degrés à l'angle définit par le bord 14 de la lame 2 et le bord 15 de la lame 3, et de préférence aux environs de 40 degrés. L'angle définit par le bord 14 de la lame 2 et le bord 26 de l'aileron 22 d'une part, et par le bord 27 de l'aileron 23 et le bord 15 de la lame 3, d'autre part, est compris entre 15 et 25 degrés, et de préférence aux environs de 20 degrés.

La dimension des outils utilisés est de préférence modifiée suivant l'épaisseur des parois à découper et le diamètre intérieur des produits. Grâce à l'invention, on peut procéder à des découpes pour des épaisseurs de parois comprises entre 20 et 150 mm environ, et des diamètres intérieurs compris entre 50 et 350 mm environ. Tout le dispositif demeure inchangé, on détache simplement l'outil des porte-lames et on le remplace par un autre.

## Revendications

1. Procédé de formation d'une fente longitudinale profilée en forme de marche dans un produit tubulaire fibreux, notamment une coquille cylindrique isolante à base de fibres minérales dans lesquelles est réparti un liant polymérisé, selon lequel on découpe partiellement la paroi (8) du produit, d'une part depuis l'intérieur, d'autre part depuis l'extérieur dans une direction radiale de façon à produire deux découpes quasiment parallèles (29) et (28) et légèrement décalées l'une par rapport à l'autre, chacune desdites découpes définissant une extrémité interne dans l'épaisseur de la paroi, caractérisé en ce que, simultanément à la formation de deux découpes radiales, on forme une troisième découpe (20) dans l'épaisseur de la paroi, cette troisième découpe étant pratiquement perpendiculaire à celle du plan de découpe radiale, de sorte que les extrémités internes des découpes radiales viennent rencontrer la troisième découpe formée.

2. Procédé selon la revendication 1, caractérisé en ce que, simultanément aux deux découpes radiales, on forme deux découpes radiales supplémentaires, l'une étant dirigée vers l'extérieur de la coquille et venant à la rencontre de la découpe amorcée depuis l'extérieur de la paroi et l'autre étant dirigée vers l'intérieur de la coquille et venant à la rencontre de la découpe amorcée depuis l'intérieur de la paroi.

3. Procédé selon la revendication 1 ou 2, caractérisé en ce que la troisième découpe est équidistante des surfaces internes et externes de la paroi.

4. Dispositif pour la mise en œuvre du procédé selon l'une quelconque des revendications 1 à 3, comprenant (A) un outil de découpe à deux lames (2, 3), présentant une partie tranchante (11, 12), disposées dans deux plans essentiellement parallèles situés à faible distance l'un de l'autre, et permettant de découper la paroi du produit tubulaire fibreux sur une partie de son épaisseur, d'une part depuis l'intérieur, d'autre part depuis l'extérieur, de façon à produire, dans la paroi, deux fentes quasiment parallèles (29) et (28) dans une direction radiale, et (B) des moyens pour créer un mouvement relatif entre le produit tubulaire fibreux et l'outil de découpe, caractérisé en ce que les deux lames (2, 3) sont assemblées de façon à être séparées par un plan de jonction (P), ledit plan de jonction se trouvant dans l'épaisseur de la paroi à découper et en ce qu'il comprend en outre une lame supplémentaire ou éperon (17) située dans le prolongement dudit plan (P) et dans un plan sensiblement perpendiculaire au plan des lames (2, 3) et agencée de façon à produire une troisième découpe essentiellement perpendiculaire aux deux fentes (29) et (28).

5. Dispositif selon la revendication 4, caractérisé en ce que les lames (2, 3, 17) présentent une partie tranchante respectivement (11, 12, 18) dont les bords, respectivement (14, 15, 19) sont effilés.

6. Dispositif selon l'une des revendications 4 ou 5, caractérisé en ce que l'éperon (17) comprend deux ailerons (22, 23), l'un (22) au-dessus du plan de l'éperon (17), l'autre (23) au-dessous.

7. Dispositif selon la revendication 6, caractérisé en ce que lesdits ailerons (22, 23) ont une section triangulaire, et une partie tranchante respectivement (24, 25) terminée par un bord effilé, respectivement (26, 27).

8. Dispositif selon la revendication 6, caractérisé en ce que l'angle défini par le bord (14) de la lame (2) et le bord (26) de l'aileron (22) est égal à l'angle défini par le bord (27) de l'aileron (23) et le bord (15) de la lame (3).

9. Dispositif selon la revendication 8, caractérisé en ce que ledit angle est égal à 20 degrés environ.

10. Dispositif selon l'une des revendications 4 à 9, caractérisé en ce que l'angle défini par le bord (14) de la lame (2) et le bord (15) de la lame (3) est égal à 40 degrés environ.

## Claims

1. Process for forming a longitudinal aperture cut in step shape in a fibrous tubular product, particularly an insulating cylindrical shell based on fibres in which a polymerised binder is distributed, according to which the wall (8) of the product is partially cut, on the one hand from the inside, on the other from the outside in a radial direction so as to produce two almost parallel cuts (28) and (29) which are slightly displaced in relation to one another, each of the said cuts defining an internal end in the thickness of the wall, characterised in that at the same time as the two radial cuts are formed, a third cut (20) is formed in the thickness of the wall, this third cut being practically perpendicular to that of the plane of radial cut, in such a way that the internal ends of the radial cuts intersect with the third cut formed.

2. Process according to Claim 1, characterised in that at the same time as the two radial cuts, two supplementary radial cuts are formed, one being directed to the outside of the shell and intersecting the cut started from the outside of the wall, and the other being directed to the inside of the shell and intersecting the cut started from the inside of the wall.

3. Process according to Claim 1 or 2, characterised in that the third cut is equidistant from the internal and external surfaces of the wall.

4. Device for carrying out the process according to any one of Claims 1 to 3, comprising (A) a cutting tool with two blades (2, 3), having a cutting part (11, 12), arranged on two essentially parallel planes situated close to each other, and allowing the wall of the fibrous tubular product to be cut over one part of its thickness, on the one hand from the inside and on the other from the outside so as to produce in the wall two almost parallel apertures (29) and (28) in a radial direction and (B) means for creating a relative movement between the fibrous tubular product and the cutting tool, characterised in that the two blades (2, 3) are arranged in such a way as to be separated by a junction plane (P) the said junction plane being located in the thickness of the wall to be cut and in that it also comprises a supplementary blade or spur (17) situated in the extension of the said plane (P) and in a plane substantially perpendicular to the plane of the blades (2, 3) and arranged in such a way as to produce a third cut substantially perpendicular to the two apertures (29) and (28).

5. Device according to Claim 4, characterised in that the blades (2, 3, 17) have a cutting part respectively (11, 12, 18) the edges of which are respectively (14, 15, 19) tapered.

6. Device according to one of the Claims 4 or 5, characterised in that the spur (17) comprises two fins (22, 23) one (22) above the plane of the spur (17) the other (23) below.

7. Device according to the Claim 6, characterised in that the said fins (22, 23) have a triangular section, and a cutting part respectively (24, 25) terminating in a tapered edge, respectively (26, 27).

8. Device according to Claim 6, charecterised in that the angle defined by the edge (14) of the blade (2) and the edge (26) of the fin (22) is equal to the angle defined by the edge (27) of the fin (23) and the edge (15) of the blade (3).

9. Device according to Claim 8, characterised in that the said angle is about 20 degrees.

10. Device according to one of the Claims 4 to 9, characterised in that the angle defined by the edge (14) of the blade (2) and the edge (15) of the blade (3) is equal to about 40 degrees.

## Patentansprüche

1. Verfahren zur Herstellung eines in Stufenform profilierten Längsschlitzes in einem rohrförmigen Faserprodukt, insbesondere in einer zylindrischen isolierenden Schale auf Basis von Mineralfasern, in welchen ein polymerisiertes Bindemittel verteilt ist, bei dem man die Wand (8) des Produktes teilweise ausschneidet, einesteils von der Innenseite, anderenteils von der Außenseite her in einer radialen Richtung, so daß zwei quasi parallele und leicht gegeneinander verschiebbare Schnitte (29) und (28) gebildet werden, wobei jeder der Schnitte innerhalb der Wandstärke ein inneres Ende bestimmt, dadurch gekennzeichnet, daß man gleichzeitig während der Bildung der beiden Radialschnitte einen dritten Schnitt (20) innerhalb der Wandstärke bildet, wobei dieser dritte Schnitt praktisch senkrecht zu der Ebene des Radialschnittes liegt, so daß die inneren Enden der Radialschnitte in den dritten so gebildeten Schnitt münden.

2. Verfahren nach Anspruch 1, dadurch gekennzeichnet, daß man gleichzeitig mit den beiden Radialschnitten zwei zusätzliche radiale Schnitte bildet, wobei der eine gegen die Außenseite der Schale gerichtet wird und in den an der Außenseite der Wand beginnenden Schnitt mündet und der andere gegen die Innenseite der Schale gerichtet ist und in den an der Innenseite der Wand beginnenden Schnitt mündet.

3. Verfahren nach einem der Ansprüche 1 oder 2, dadurch gekennzeichnet, daß der dritte Schnitt in Bezug auf innere und äußere Oberflächen der Wand äquidistant ist.

4. Vorrichtung zur Durchführung des Verfahrens nach einem der Ansprüche 1 bis 3, mit:

(A) einem Schneidwerkzeug mit zwei Klingen (2, 3), einen schneidenden Teil (11, 12) aufweisend, der in zwei Ebenen angeordnet ist, die im wesentlichen in einem kleinen Abstand zueinander parallel liegen und es erlauben die Wand des rohrförmigen Faserproduktes auf einen Teil seiner Stärke zu schneiden, einesteils von der Innenseite und anderenteils von der Außenseite, so daß innerhalb der Wand zwei quasi parallele Schlitze (29) und (28) in einer Radialrichtung gebildet werden; und

(B) einer Einrichtung zum Schaffen einer Relativbewegung zwischen dem rohrförmigen Faserprodukt und dem Schneidwerkzeug, dadurch gekennzeichnet, daß die beiden Klingen (2, 3) so montiert sind, daß sie durch eine Verbindungsebene (P) getrennt sind, wobei die Verbindungsebene sich in der zu schneidenden Wandstärke befindet, und daß es unter anderem eine zusätzliche Klinge oder Sporn (17) umfaßt, welcher in der Verlängerung der Ebene (P) und in einer Ebene, die im wesentlichen senkrecht zur Ebene der Klingen (2, 3) ist, liegt und so angeordnet ist, daß ein dritter, im wesentlichen zu den beiden Schlitzen (29) und (28) senkrechter Schnitt gebildet wird.

5. Vorrichtung nach Anspruch 4, dadurch gekennzeichnet, daß die Klingen (2, 3, 17) einen Schneidteil entsprechend (11, 12, 18) aufweisen, dessen Ränder entsprechend (14, 15, 19) geschärft sind.

6. Vorrichtung nach einem der Ansprüche 4 oder 5, dadurch gekennzeichnet, daß der Sporn (17) zwei Stege (22, 23) umfaßt, der eine (22) unterhalb der Ebene des Sporns (17), der andere (22) oberhalb.

7. Vorrichtung nach Anspruch 6, dadurch gekennzeichnet, daß die Stege (22, 23) einen dreieckförmigen Bereich so wie einen Schneidteil entsprechend (24, 25) aufweisen, der durch einen geschärften Rand, entsprechend (26, 27) abgeschlossen wird.

8. Vorrichtung nach Anspruch 6, dadurch gekennzeichnet, daß der Winkel, der durch den Rand (14) der Klinge (2) und den Rand (26) des Steges (22) bestimmt ist, dem Winkel gleich ist, der durch den Rand (27) des Steges (23) und den Rand (15) der Klinge (3) bestimmt ist.

9. Vorrichtung nach Anspruch 8, dadurch gekennzeichnet, daß der Winkel ungefähr 20° beträgt.

10. Vorrichtung nach einem der Ansprüche 4 bis 9, dadurch gekennzeichnet, daß der Winkel, der durch den Rand (14) der Klinge (2) und dem Rand (15) der Klinge (3) bestimmt ist, ungefähr 40° beträgt.

FIG_1

EP 0 170 586 B1

FIG - 2

FIG - 3

29  28  20

8

9

21

D

FIG - 4

26  24  22

18

25  27  23

FIG - 5

19  25  23

18  24  22

VUE  PARTIELLE  SUIVANT  C

COUPE   A - A

FIG - 6

FIG - 7